# EUROPÄISCHE PATENTANMELDUNG

(11) **EP 4 491 681 A1**
(43) Veröffentlichungstag der Anmeldung: **15.01.2025**
(21) Anmeldenummer: 24186306.7
(22) Anmeldetag: 03.07.2024
(51) Int. Cl.: C09D 5/08, C23C 22/80, B05D 7/00, C09D 161/06, C09D 163/00, C09D 5/00, C09D 171/00, C08G 59/62

(54) **KORROSIONSSCHUTZSYSTEM ZUR BESCHICHTUNG EINER METALLOBERFLÄCHE EINES SPANNSTAHLS, VERFAHREN ZUM BESCHICHTEN DER METALLOBERFLÄCHE DES SPANNSTAHLS SOWIE SPANNSTAHL MIT DER BESCHICHTETEN METALLOBERFLÄCHE**

(30) Priorität: 03.07.2023 EP 23183098
(71) Anmelder: voestalpine Wire Austria GmbH, 8600 Bruck an der Mur (AT)
(72) Erfinder: GROS, Georg Josef, 76646 Bruchsal (DE)
(74) Vertreter: Jell, Friedrich

(57) **Zusammenfassung**

Es werden ein Korrosionsschutzsystem zur Beschichtung einer Metalloberfläche eines Spannstahls, ein Verfahren zum Beschichten der Metalloberfläche des Spannstahls sowie der Spannstahl mit der beschichteten Metalloberfläche gezeigt.

## Beschreibung

Die Anmeldung betrifft ein Korrosionsschutzsystem zur Beschichtung einer Metalloberfläche eines Spannstahls, ein Verfahren zum Beschichten der Metalloberfläche des Spannstahls sowie den Spannstahl mit der beschichteten Metalloberfläche.

Spannstahl in Form von Stahldrähten oder -litzen wird in verschiedenen Bauwerken angewandt, um die Zugfestigkeit des verwendeten Materials zu erhöhen. Der Spannstahl wird dabei mit einer Zugkraft vorgespannt und erzeugt so Druckspannungen in Bauwerken. Die Bauwerke werden durch diese Vorspannung so belastet, dass sie gegen die zu erwartenden äußerlichen Belastungen wirken und keine oder nur kleine Zugspannungen im Querschnitt entstehen. Materialien wie beispielsweise Beton, welche nur geringe Zugspannungen aufnehmen können, bevor sie versagen, sind durch die Vorspannung unter höheren Belastungen nutzbar. Um eine lange Lebensdauer zu gewährleisten, ist es notwendig, den Spannstahl vor Korrosion und mechanischen Beschädigungen zu schützen.

Die Korrosionsbeständigkeit wird üblicherweise erreicht, indem der Spannstahl von einem geeigneten Korrosionsschutz umgeben wird. Aus dem Stand der Technik sind verschiedene Verfahren bekannt, bei denen der Spannstahl z. B. in Hüllrohre, gefüllt mit einem Korrosionsschutz, eingebettet wird oder auch mit dem Korrosionsschutz beschichtet wird.

Ein bekanntes Verfahren zur Herstellung von mit Spannstahl verstärkten Bauwerken wird im Folgenden beschrieben. Vor dem Gießen des Bauwerks wird ein Hüllrohr in das Material eingebracht. In dieses wird ein Spannstahl (Stahldraht, Stahlstab, Stahllitze oder Ähnliches) eingeführt. Nach dem Aushärten des Betons wird der Spannstahl mithilfe einer Spannmaschine gespannt. Danach wird ein Korrosionsschutz (z. B. Zementmilch, Wachs, Gel oder Ähnliches), zwischen das Hüllrohr und den Spannstahl injiziert. Dieses Verfahren ist zeitintensiv und in der Durchführung nicht trivial.

Ein weiteres bekanntes Verfahren ist das Überziehen des Spannstahls mit einem Korrosionsschutzmittel wie Wachs, Fett, Gel oder Ähnlichem, bevor der Spannstahl in ein Hüllrohr eingebracht wird. Das so erhaltene Vorspannsystem kann sowohl in einem Material eingebettet vorliegen, als auch außerhalb des Baumaterialquerschnittes, aber innerhalb der Umhüllenden des Tragwerkes.

DE3234246 A1 beschreibt ein Schrägseil mit mehreren in einem Hüllrohr aufgenommenen dicht gepackten Spannstäben aus Stahl, deren Zwischenräume untereinander und mit dem Hüllrohr mit Zementleim ausgepresst sind.

US3646748 A beschreibt ein Verfahren, bei welchem mehrere Stahllitzen von einem Korrosionsschutz mit Schmierfett-ähnlichen Eigenschaften umgeben werden und anschließend ein Hüllrohr aufextrudiert wird.

Den bekannten Verfahren gemeinsam ist der hohe Ressourceneinsatz. Spannglieder, gefertigt aus glattem, kaltgezogenem Stahldraht und Hüllrohren aus Kunststoff, weisen pro Laufmeter einen Hohlraum von bis zu 3,4 I auf, welcher beispielsweise mit Fett verfüllt wird. Die Wandstärke der meist aus Polyethylen bestehenden Hüllrohre beträgt dabei bis zu 5,1 mm. Gängige ummantelte Stahllitzen enthalten pro Laufmeter bis zu 50 g Fett und 120 g Polyethylen. Die aufextrudierten Hüllrohre weisen dabei üblicherweise Mindestschichtstärken von 1,5 mm auf.

Aufgrund der hohen benötigten Wandstärken bei Hüllrohren aus Kunststoff, oder dem Ausfüllen ganzer Hohlräume mit Lipiden oder Zementleim, können Spannglieder mit den bekannten Korrosionsschutzsystemen nach ihrer Lebensdauer nicht ohne kostenintensive Aufbereitung dem Schrottkreislauf zugeführt werden.

Die Aufgabe der vorliegenden Erfindung besteht darin, ein Korrosionsschutzsystem zur Beschichtung einer Metalloberfläche eines Spannstahls bereitzustellen, welches trotz hoher Korrosionsschutzwirkung sparsam im Verbrauch von Material ist. Zudem soll ein damit beschichteter Spannstahl nach dem Einsatz ohne Weiteres dem Schrottkreislauf zugeführt werden können.

Die Erfindung löst die Aufgabe durch die Merkmale des Anspruches 1.

Zur Lösung der Aufgabe wird ein Korrosionsschutzsystem zur Beschichtung einer Metalloberfläche eines Spannstahls vorgeschlagen, welches zumindest die folgenden in der genannten Reihenfolge in Schichten aufzutragenden Bestandteile (A und B) umfasst:
einen Primer (A), umfassend
   - ein Bindemittel, aufweisend
      ∘ zumindest ein Phenolharz und
      ∘ zumindest ein Silan-Oligomer,
   - zumindest eine Säure, insbesondere Hexafluortitansäure,
   - zumindest ein Lösungsmittel,
und einen Decklack (B), umfassend
   - ein Bindemittel, aufweisend
      ∘ zumindest ein Phenolharz,
      ∘ zumindest ein Phenoxyharz und
      ∘ zumindest einen Vernetzer, insbesondere blockiertes Isocyanat,
   - einen Verdicker, insbesondere Bentonit,
   - zumindest ein Lösungsmittel.

Beim erfindungsgemäßen Korrosionsschutzsystem werden Primer und Decklack auf eine Metalloberfläche nacheinander in genannter Reihenfolge in Schichten aufgetragen.

Primer: Der Primer dient als Haftvermittler durch Ausbildung direkter chemischer Bindungen zwischen Primer und Metalloberfläche sowie zwischen Primer und Decklack. Hierbei raut die Säure des Primers die Metalloberfläche auf und verbessert dadurch die Haftung des Primers an der Metalloberfläche. Dies unter anderem aufgrund des im Bindemittel enthaltenen Silans - so vernetzen im erfindungsgemäßen Primer Phenolharz und Silan miteinander. Des Weiteren wird es durch das erfindungsgemäße Bindemittel des Primers mit dessen vergleichsweise geringen Teilchengröße von Phenolharz und Silan (beide gegebenenfalls in wässriger Lösung emulgiert) möglich, selbst in feinste Vertiefungen an der Substratoberfläche einzudringen und diese auszufüllen. Eine vergleichsweise feste Anbindung des Primers an die Substratoberfläche kann so geschaffen werden. Auch kann auf Isocyanat als Vernetzer im Bindemittel verzichtet werden, wodurch sich der erfindungsgemäße Primer auch mit beispielsweise ausreichend hoher Partikel-Feinheit herstellen lässt. Damit ist auch dessen Eigenschaft, in feinste Vertiefungen an der Substratoberfläche einzudringen, nicht gefährdet. Dies auch dann, wenn es sich beispielsweise um einen wasserbasierten Primer handelt.

Decklack: Der erfindungsgemäße Decklack bindet an diesen Primer besonders an, dies insbesondere durch das besondere Bindemittel des Decklacks. So vernetzen am Übergang von Primer zu Decklack die enthaltenen Harze (zumindest Phenolharz, Phenoxyharz) des Decklacks über den im Decklack enthaltenen Vernetzer mit dem Phenolharz und Silan des Primers. Hierbei kann beispielsweise von Vorteil sein, wenn der Vernetzer ein blockiertes Isocyanat ist, welches beispielsweise bei Vernetzungstemperatur de-blockiert und aktiviert wird. Zudem wird diese Anbindung von Decklack und Primer dadurch unterstützt, dass eine Vernetzungsreaktionen zwischen dem Phenolharz des Decklacks und dem Silan des Primers stattfindet, dies beispielsweise auch ohne Beteiligung des Vernetzers des Decklacks. Zudem vernetzen die im Decklack enthaltene Harze (zumindest Phenolharz und Phenoxyharz) über den Vernetzer, beispielsweise das aktivierte Isocyanat, miteinander (Polyharnstoffreaktion).

Erfindungsgemäß führt dies zu einer deutlich verbesserten Schichthaftung, was besonders die Korrosionsbeständigkeit (z. B. Ritzunterwanderung gemessen nach EN ISO 12944-6:2018) verbessert und/oder eine geringere Schichtdicke für einen ressourcenschonenden Materialverbrauch ermöglicht.

Bei der Trocknung und Vernetzung der Schichten verdampft das Lösungsmittel und es kommt zur Ausbildung einer Beschichtung.

Die Beschichtung kann aufgrund der erfindungsgemäß vorgeschlagenen Bindemittel des Primers und des Decklacks zu einer hochmolekularen Bindemittelmatrix (>100.000 Dalton) mit hydrophober Oberfläche führen. Dadurch kann die Beschichtung eine hohe Beständigkeit in dauerfeuchter Atmosphäre, sowie gegen Chemikalien, insbesondere gegen organische Lösungsmittel aufweisen. Mechanisch kann sie sich durch eine hohe Abrasionsbeständigkeit und Verschleißfestigkeit auszeichnen und dauerelastisch sowie alterungsbeständig von -20 °C bis +80 °C (Grad Celsius) sein.

Erfindungsgemäß kann so die Beschichtung auf verschiedensten Metalloberflächen eine gute Haftung aufweisen, wobei zum Beschichten Oberflächen aus Stahl besonders geeignet sind. Außerdem kann durch den Einsatz des Primers in der erfindungsgemäßen Zusammensetzung eine signifikante Reduktion der Schichtunterwanderung, beispielsweise vom Ritz ausgehend, in neutraler Salzsprühnebelprüfung gemäß EN ISO 9227:2017 erreicht werden.

Das Korrosionsschutzsystem ist besonders geeignet für eine Beschichtung mit einer Trockenfilmdicke von 5 - 100 µm (Mikrometer), bevorzugt 10 - 60 µm, besonders bevorzugt 10 - 40µm und insbesondere 15 - 30 µm, wobei der Beitrag des Primers zu dieser Trockenfilmdicke < 0,4 µm beträgt. Besonders vorteilhaft hat sich hierfür die Zugabe von Verdicker erwiesen, durch welchen die Viskosität und die Rheologie des Decklacks reguliert werden können. Dabei kann die Menge an Verdicker so gewählt werden, dass sich bei dem gewählten Verhältnis von hochmolekularem Phenoxyharz und dem hoch- bis mittelmolekularem Phenolharz die resultierende Rheologie so einstellt, dass der Decklack sich besonders vorteilhaft über das gewählte Aufbringungsverfahren auf die Metalloberfläche aufbringen lässt. Vorteilhaft ist es, die Neigung zum Ablaufen des Nassfilms zu verringern. Der Verdicker kann auch ein Absetzen der Pigmente verhindern, wenn der Decklack längere Zeit nicht umgewälzt wird.

Aufgrund der haftvermittelnden Eigenschaften des Primers, sowie der hochmolekularen Zusammensetzung und hydrophobierenden Wirkung des Decklacks ist diese Trockenfilmdicke ausreichend für einen mit den bekannten Systemen vergleichbaren Korrosionsschutz.

Die Beschichtung erfüllt die Anforderungen an die Korrosionsbeständigkeit für die Korrosivitätskategorie/Schutzdauer C2/VH (very high) nach EN ISO 12944-6:2018 bei deutlich geringerer Trockenfilmdicke, als in der Norm vorgeschrieben (Norm: 180 µm). Sie schützt vor Spannungsrisskorrosion (Standzeit >168 h bei Prüfung nach EN ISO 15630-3:2019, Abschnitt 11 - Lösung A).

Das Korrosionsschutzsystem ist daher für die Beschichtung von Metalloberflächen, insbesondere Spannstahl in Form von Stahldrähten oder -litzen in Vorspannsystemen zur Verstärkung von Bauwerken, wie zum Beispiel Windtürme oder Brücken, besonders gut geeignet. Andere Anwendungen mit ähnlichen Anforderungen sind ebenso möglich.

Mit dem Korrosionsschutzsystem beschichtete metallische Gegenstände können dem Schrottkreislauf zugeführt werden, da die geringe Auflage der organischen Beschichtung keinen störenden Einfluss auf eine erneute Erschmelzung hat. Zudem kommt es im Recyclingprozess zu einer weitaus geringeren Freisetzung von klima- und umweltschädlichen, sowie gesundheitsgefährdenden Emissionen, als dies bei gängigen Systemen mit großen Gehalten an Lipiden oder organischen Polymeren der Fall ist.

Vorzugsweise setzt sich das Bindemittel des Primers aus einer, insbesondere wässrigen, Phenolharz-Lösung mit optionalem Acrylat und zumindest einem Silan-Oligomer zusammen. Die, insbesondere wässrige, Phenolharz-Lösung ist bevorzugt kationisch stabilisiert. Die, insbesondere wässrige, Phenolharz-Lösung weist einen Festkörperanteil von 27 - 33 Gew.-% auf. Die Phenolharz-Lösung kann eine Menge von 0 - 20 Gew.-% Acrylat enthalten, wobei sich die Gewichtsangabe auf den Festkörper der Phenolharz-Lösung bezieht. Bevorzugt sind in der, insbesondere wässrigen, Phenolharz-Lösung des Bindemittels des Primers zumindest ein Phenolharz und 0 - 20 Gew.-% Acrylat gelöst.

Es hat sich gezeigt, dass eine Zusammensetzung aus 5 - 20 Gew.-%, bevorzugt 9 - 13 Gew.-%, besonders bevorzugt 10 - 12 Gew.-%, Festkörperanteil der Phenolharz-Lösung im Primer besonders vorteilhaft ist, wobei die Gewichtsangabe sich auf die Zusammensetzung des Primers bezieht. Bevorzugt ist im Primer der Festkörperanteil der, insbesondere wässrigen, Phenolharz-Lösung mit 5 - 20 Gew.-%, bevorzugt 9 - 13 Gew.-%, besonders bevorzugt 10 - 12 Gew.-%, bezogen auf das Gewicht des Primers, enthalten.

Das zumindest eine Silan-Oligomer ist vorzugsweise mit 1 - 10 Gew.-%, bevorzugt 2 - 5 Gew.-%, besonders bevorzugt 3 - 4 Gew.-%, im Primer enthalten, wobei die Gewichtsangabe sich auf die Zusammensetzung des Primers bezieht. Das Silan-Oligomer kann ausgewählt werden aus der Gruppe von Amino-, Epoxy-, Amino/Alkyl-, Diamino-, Vinyl-, bevorzugt aber 3-Aminopropyltriethoxy- und/oder 3-Glycidoxypropyltrimethoxysilan.

Das Bindemittel des Primers bewirkt einen Haftverbund zwischen Metalloberfläche und Deckschicht. Das Molekulargewicht des Bindemittels liegt zwischen 5.000 - 10.000 Dalton.

Die zumindest eine Säure des Primers ist beispielsweise Hexafluortitansäure. Es können auch Hexafluortitansäure gemeinsam mit Phosphorsäure, Hexafluorozirconiumsäure oder andere Halogen-Element-Säuren verwendet werden. Die Säure wird als fester Stoff dem Primer zugesetzt. Es kann sich als vorteilhaft erweisen, wenn Hexafluortitansäure in einer Menge von 0,1 - 5 Gew.-%, bevorzugt 1 - 4 Gew.-%, besonders bevorzugt 2 - 3 Gew.-%, dem Primer zugesetzt wird, wobei sich die Gewichtsangabe auf die Zusammensetzung des Primers bezieht. Phosphorsäure kann in einer Menge von 0 - 8 Gew.-%, bevorzugt 3 - 7 Gew.-%, besonders bevorzugt 4 - 5,5 Gew.-%, dem Primer zugesetzt werden, wobei sich die Gewichtsangabe auf die Zusammensetzung des Primers bezieht. Die Säuren können die Metalloberfläche aufrauen und dadurch die Haftung des Primers an der Metalloberfläche verbessern.

Im Primer können optional ein oder mehrere Korrosionsschutzpigmente enthalten sein. Korrosionsschutzpigmente können aus der Gruppe aufweisend Zinkoxide, basisches Zink-Silikophosphathydrat, basisches Zink-Molybdatophosphathydrat, basisches Aluminium-Zinkphosphathydrat, Strontiumchromat, Zinkchromat, Zinktetraoxichromat, Silikate und bevorzugt Zinkphosphat ausgewählt werden. Es hat sich als vorteilhaft erwiesen, wenn die Korrosionsschutzpigmente im Primer in einer Menge von 0 - 2 Gew.-%, bevorzugt 0,5 - 1,5 Gew.-%, besonders bevorzugt 0,75 - 1,25 Gew.-%, enthalten sind.

Als weitere Additive des Primers zusätzlich oder alternativ können ein oder mehrere Netzmittel und/oder ein oder mehrere Entschäumer enthalten sein. Geeignete Netzmittel sind ein Ammoniumsalz eines Acrylatcopolymers, Polydimethylsiloxan und bevorzugt Alkylolammoniumsalz. Netzmittel ermöglichen eine gleichmäßige Benetzung der Metalloberfläche mit dem Primer und können im Beschichtungsprozess bei im Kreislauf verwendetem Primer rückfließenden Abtrag der Metalloberfläche aufnehmen, indem sie gelöste Metallionen binden. Insgesamt können Netzmittel in einer Menge von 0 - 1,5 Gew.-%, bevorzugt 0,1 - 0,5 Gew.-%, besonders bevorzugt 0,4 - 0,6 Gew.-%, dem Primer zugesetzt werden, wobei die Gewichtsangabe sich auf die Zusammensetzung des Primers bezieht. Geeignete Entschäumer sind Mineralölentschäumer, bevorzugt schaumzerstörendes Polysiloxan und hydrophobe Feststoffe. Insgesamt können Entschäumer in einer Menge von 0 - 0,5 Gew.-%, bevorzugt 0 - 0,1 Gew.-%, besonders bevorzugt 0,005 - 0,02 Gew.-%, dem Primer zugesetzt werden, wobei die Gewichtsangabe sich auf die Zusammensetzung des Primers bezieht.

Vorteilhaft besteht der Rest des Primers aus einem Lösungsmittel, welches bevorzugt vollentsalztes oder destilliertes Wasser ist. Es wird in einer Menge von 60 - 97 Gew.-%, bevorzugt 70 - 80 Gew.-%, besonders bevorzugt 75 - 77,5 Gew.-%, zugesetzt, wobei die Gewichtsangabe sich auf die Zusammensetzung des Primers bezieht.

Beispielsweise kann die Gesamtmenge an im Primer enthaltenem Festkörperanteil 3 - 40 Gew.-%, bevorzugt 20 - 30 Gew.-%, besonders bevorzugt 22,5 - 25 Gew.-%, betragen, wobei die Gewichtsangabe sich auf die Zusammensetzung des Primers bezieht. Der Festkörperanteil, also der Gehalt an nichtflüchtigen Anteilen, wird nach EN ISO 3251 :2019 bestimmt. Dazu wird die Zusammensetzung mit einer Einwaage von (1 ± 0,1) g, für 1 Stunde bei 105 °C getrocknet und anschließend gewogen.

Es kann sich als vorteilhaft erweisen, wenn die Menge an Phenolharz und Phenoxyharz im Decklack jeweils 1,00 - 18,00 Gew.-%, bevorzugt 5,00 - 12,00 Gew.-%, besonders bevorzugt 7,00 - 9,00 Gew.-%, beträgt, bezogen auf das Gewicht des Decklacks. Das Molekulargewicht des Phenolharzes liegt bevorzugt zwischen 10.000 und 50.000 Dalton und das Molekulargewicht des Phenoxyharzes zwischen 55.000 und 90.000 Dalton. Bei der Vernetzung kann das Molekulargewicht auf >100.000 Dalton ansteigen. Das Phenoxyharz kann bei der thermischen Vernetzung an das Phenolharz des Primers anbinden und sich günstig auf die Korrosionsbeständigkeit und die Haftung der Beschichtung auswirken. Das Phenoxyharz und das Phenolharz können die Hydrophobierung der Beschichtung und Verbesserung der Beständigkeit gegen Lösemittel bewirken. Durch die resultierende hochmolekulare, hydrophobe Bindemittelmatrix kann man schon bei geringen Schichtdicken von etwa 5-50 µm (5 bis 50 µm) eine gegen korrosionsauslösende Bestandteile aus der Umgebung dichte, zähelastische Beschichtung erhalten, was Systeme aus beispielsweise reinem Phenolharz nicht erreichen könnten. Das Bindemittel kann eine Barriere gegen Feuchtigkeit, Dampf und andere korrosionsauslösende Bestandteile aus der Umgebung erzeugen und ist für die Anbindung an den Primer verantwortlich.

In einer vorteilhaften Ausführungsform beträgt die Menge an Vernetzer im Decklack insgesamt 3,00 - 15,00 Gew.-%, bevorzugt 4,00 - 10,00 Gew.-%, besonders bevorzugt 6,50 - 8,50 Gew.-%, bezogen auf das Gewicht des Decklacks. Als besonders vorteilhaft hat sich die Zusammensetzung erwiesen, wenn der Vernetzer ein blockiertes Isocyanat, insbesondere ein aliphatisches Isocyanat ist.

Polyesterharz kann in einer Menge von 0,00 - 18,00 Gew.-%, bevorzugt 7,00 - 12,00 Gew.-%, besonders bevorzugt 9,00 - 11,00 Gew.-%, zugesetzt werden.

Als verdickendes Pigment wird dem Decklack ein Verdicker, insbesondere Bentonit mit der CAS-Nummer 1302-78-9, zugesetzt. Es hat sich als vorteilhaft erwiesen, wenn der Verdicker in einer Menge von 0,25 - 2,00 Gew.-%, bevorzugt 0,50 - 1,50 Gew.-%, besonders bevorzugt 0,75 - 1,25 Gew.-%, dem Decklack zugesetzt wird, wobei sich die Gewichtsangabe auf die Zusammensetzung des Decklacks bezieht. Durch die Zugabe von Verdicker können die Viskosität und die Rheologie des Decklacks reguliert werden. Dabei kann die Menge an Verdicker so gewählt werden, dass sich bei dem gewählten Verhältnis von hochmolekularem Phenoxyharz und dem hoch- bis mittelmolekularem Phenolharz die resultierende Rheologie so einstellt, dass der Decklack sich besonders vorteilhaft über das gewählte Aufbringungsverfahren auf die Metalloberfläche aufbringen lässt. Vorteilhaft ist es, die Neigung zum Ablaufen des Nassfilms zu verringern. Der Verdicker kann auch ein Absetzen der Pigmente verhindern, wenn der Decklack längere Zeit nicht umgewälzt wird.

Um den Korrosionsschutz des Decklacks und dadurch im gesamten Korrosionsschutzsystem zu verbessern, kann vorgesehen sein, dass in der Zusammensetzung zumindest ein Korrosionsschutzpigment enthalten ist. Das Korrosionsschutzpigment kann aus der Gruppe aufweisend Zinkphosphate, Magnesiumphosphate, Aluminiumphosphate, Zinkoxid, Zink-Silikophosphathydrat, Zink-Molybdatophosphathydrat, Aluminium-Zinkphosphathydrat, Bariummetaborat, Strontiumchromat, Zinkchromat, Zinkborat und Silikate, insbesondere Calcium-modifiziertes Silikat ausgewählt werden. Um einen besonders effektiven Korrosionsschutz zu erreichen, beträgt die Menge an Korrosionsschutzpigment 0,00 - 10,00 Gew.-%, bevorzugt 2,00 - 7,50 Gew.-%, besonders bevorzugt 2,50 - 6,00 Gew.-%. Alle Gewichtsangaben für die Korrosionsschutzpigmente des Decklacks beziehen sich jeweils auf die Zusammensetzung des Decklacks.

Vorzugsweise enthält der Decklack Wachs in Pulverform, bevorzugt Polyamidwachs, Polytetrafluorethylenwachs, Polyethylenwachs und Polypropylenwachs. Das Polyamidwachs, Polytetrafluorethylenwachs, Polyethylenwachs und/oder Polypropylenwachs werden insgesamt in einer Menge von 0,00 - 5,00 Gew.-%, bevorzugt 0,25 - 3,50 Gew.-%, besonders bevorzugt 0,50 - 3,00 Gew.-%, zugesetzt. Diese Pigmente können die Reibung vermindern und dadurch die Abrasionsbeständigkeit des gesamten Korrosionsschutzsystems verbessern. Alle Gewichtsangaben für die Pigmente des Decklacks beziehen sich jeweils auf die Zusammensetzung des Decklacks.

Dem Decklack können ein oder mehrere Wachse mit einem Erweichungspunkt < 80 °C zugesetzt werden, bevorzugt Paraffin. Die Menge an Wachsen mit einem Erweichungspunkt < 80 °C beträgt insgesamt 0,00 - 2,00 Gew.-%, bevorzugt 0,10 - 1,25 Gew.-%, besonders bevorzugt 0,25 - 1,00 Gew.-%, wobei sich die Gewichtsangabe auf die Zusammensetzung des Decklacks bezieht. Bei der Trocknung kann sich das Wachs an der Oberfläche anreichern und dort eine verminderte Reibung und dadurch verbesserte Abrasionsbeständigkeit des Korrosionsschutzsystems ermöglichen.

Beispielsweise kann der Decklack besonders vorteilhafte Eigenschaften aufweisen, wenn das Verhältnis in Gew.-% von dem Bindemittel zu den Pigmenten des Decklacks 1,0 : 0,50, bevorzugt 1,0 : 0,40, besonders bevorzugt 1,0 : 0,32, beträgt.

Um die Eigenschaften des Decklacks weiter zu verbessern, kann auch vorgesehen sein, dass in der Zusammensetzung ein oder mehrere Netzmittel, insbesondere ein Block-Copolymer mit pigmentaffinen Gruppen, vorzugsweise ein niedermolekulares ungesättigtes Polycarbonsäurepolymer, enthalten sind. Netzmittel ermöglichen eine gleichmäßige Benetzung der Pigmente vom Bindemittel und des Decklacks zur Oberfläche des Primers. Wenn ein oder mehrere Netzmittel enthalten sind, so ist es besonders bevorzugt, wenn diese mit 0,00 - 1,50 Gew.-%, bevorzugt 0,10 - 0,50 Gew.-%, besonders bevorzugt 0,10 - 0,25 Gew.-%, des Decklacks zugesetzt werden, wobei sich die Gewichtsangabe auf die Zusammensetzung des Decklacks bezieht.

Um die Verarbeitbarkeit des Decklacks zu verbessern, kann vorgesehen sein, dass in der Zusammensetzung ein oder mehrere Entschäumer enthalten sind. Geeignete Entschäumer wären schaumzerstörende Polymere, insbesondere schaumzerstörende Polyacrylate. Wenn ein Entschäumer enthalten ist, so ist es vorteilhaft, wenn der Entschäumer mit 0,00 - 1,50 Gew.-%, bevorzugt 0,10 - 1,00 Gew.-%, besonders bevorzugt 0,25 - 1,00 Gew.-%, des Decklacks zugesetzt wird, wobei sich die Gewichtsangabe auf die Zusammensetzung des Decklacks bezieht.

Dem Decklack können auch ein oder mehrere Katalysatoren zugesetzt werden aus der Gruppe aufweisend Dibutyl-Zinndilaurat, Zinn(IV)-Alkoxylat, insbesondere Dibutyl-Zinndiacetat oder Wismut-Carboxylat. Die Menge an insgesamt zugesetztem Katalysator beträgt 0,00 - 1,50 Gew.-%, bevorzugt 0,00 - 1,25 Gew.-%, besonders bevorzugt 0,00 - 1,00 Gew.-%, wobei sich die Gewichtsangabe auf die Zusammensetzung des Decklacks bezieht. Der Katalysator kann die Peak Metal Temperature senken und die Vernetzung beschleunigen.

Vorzugsweise beträgt die Gesamtmenge an im Decklack enthaltenem Festkörperanteil 20 - 70 Gew.-%, bevorzugt 30 - 60 Gew.-%, besonders bevorzugt 40 - 50 Gew.-%. Der Festkörperanteil, also der Gehalt an nichtflüchtigen Anteilen, wird nach EN ISO 3251:2019 bestimmt. Dazu wird die Zusammensetzung mit einer Einwaage von (1 ± 0,1) g, für 1 Stunde bei 125 °C getrocknet und anschließend gewogen.

Vorteilhaft besteht der Rest des Decklacks aus einem Lösungsmittel oder Lösungsmittelgemisch bevorzugt ausgewählt aus der Gruppe aufweisend Ester und Ketone, insbesondere Methoxypropylacetat, Cyclohexanon und/oder Butyldiglykolacetat. Die Menge an Lösungsmittel beträgt 20 - 70 Gew.-%, bevorzugt 30 - 60 Gew.-%, besonders bevorzugt 40 - 50 Gew.-%, wobei die Gewichtsangabe sich auf die Zusammensetzung des Decklacks bezieht.

Eine weitere Aufgabe der vorliegenden Erfindung besteht darin, ein Verfahren zu schaffen, mit dem reproduzierbar eine Metalloberfläche eines Spannstahls mit einem Korrosionsschutzsystem beschichtet werden kann.

Die Erfindung löst die Aufgabe durch die Merkmale des Anspruches 15.

Das erfindungsgemäße Korrosionsschutzsystem, aufweisend Primer und Decklack, kann mit einem einfach handhabbaren Verfahren auf eine Metalloberfläche aufgebracht werden. Beispielsweise umfasst dieses die folgenden Schritte:
- insbesondere Reinigen der Metalloberfläche,
- Aufbringen des Primers,
- Trocknen des Primers,
- Aufbringen des Decklacks und
- Trocknen des Decklacks.

Zur Reinigung der Metalloberfläche können mechanische, chemische oder kombinierte Verfahren verwendet werden.

Der Primer wird in einer geeigneten Konzentration durch Sprühen, Tauchen oder Fluten auf die optional auf 15 - 100 °C, bevorzugt 25 - 90 °C, besonders bevorzugt 40 - 90 °C, vorgewärmte Metalloberfläche aufgebracht. Eine geeignete Konzentration des Primers erzielt bei Verwendung von Hexafluortitansäure eine Auflage von 2 - 10 mg Titan pro m² (Röntgen-Fluoreszenz-Analyse).

Der Primer wird bei einer Temperatur von 15 - 200 °C, bevorzugt 40 - 100 °C, besonders bevorzugt 50 - 90 °C für 1 - 60 Sekunden getrocknet, sodass das Lösungsmittel verdampft.

Der Decklack wird durch Sprühen, Tauchen oder Fluten auf den trockenen Primer bei einer Substrattemperatur von < 70 °C aufgebracht.

Der Decklack wird bei einer Peak Metal Temperature von 160 - 400 °C, bevorzugt 200 - 360 °C, besonders bevorzugt 240 - 320 °C für 3 - 60 Sekunden getrocknet und zu einer Deckschicht vernetzt. Die Peak Metal Temperature ist jene Temperatur, welche die Metalloberfläche maximal erreicht. Sie kann durch Temperaturmessstreifen oder durch Infrarot-Thermometer bestimmt werden.

Mit dem vorstehenden beschriebenen Verfahren kann beispielsweise ein Spannstahl beschichtet werden. Erfindungsgemäß weist der Spannstahl eine beschichtete Metalloberfläche auf, wobei diese Beschichtung der Metalloberfläche aufweist: eine Grundierung umfassend eine Matrix aus Phenolharz und Silan-Oligomer, und eine mit der Grundierung chemisch verbundene Deckschicht umfassend eine vernetzte, duroplastische Matrix aus Phenolharz und Phenoxyharz, sowie in der duroplastischen Matrix verteilten Verdicker.

Die Beschichtung weist eine optimale Schichthaftung und ausreichende Schichtintegrität auf. Vorzugsweise beträgt die Trockenfilmdicke 5 - 100 µm, besonders bevorzugt 10 - 60 µm, insbesondere 15 - 30 µm.

Die Bestandteile der Beschichtung können insbesondere die zuvor mit Bezug auf die Zusammensetzung des Primers und des Decklacks angeführten Eigenschaften aufweisen. Zudem können vorzugsweise auch die zuvor als optional genannten Bestandteile der Zusammensetzung in der Beschichtung enthalten sein. Eine besonders geeignete Ausführungsform betrifft daher einen metallischen Gegenstand, insbesondere einen Spannstahl mit einer Beschichtung, die zusätzlich Wachse und/oder Korrosionsschutzpigmente umfasst, vorzugsweise mit den zuvor angeführten speziellen Eigenschaften. Eine solche Beschichtung ist besonders geeignet für Stahldrähte oder -litzen in Vorspannsystemen zur Verstärkung von Bauwerken, z.B. für Windtürme oder Brücken.

Vorteilhafte Ausführungsformen der Erfindung werden beispielsweise anhand der folgenden Ausführungsbeispiele dargestellt:

**Tabelle 1 (* nicht erfindungsgemäßes Beispiel)**

| Zusammensetzung des Primers (in Gew.-%) | | | | | | | |
|---|---|---|---|---|---|---|---|
| Rezepturvariante | V-1 | V-2 | V-3 | V-4 | V-5 | V-6 | V-7* |
| Bindemittel | | | | | | | |
| Phenolharz-Lösung (kationisch stabilisiert, Festkörperanteil 30 Gew.-%, davon 3 Gew.-% Acrylat) | 5,00 | 11,00 | 11,00 | 11,00 | 11,00 | 11,00 | 11,00 |
| 3-Aminopropyltriethoxysilan (Oligomer) | 5,00 | 4,00 | 0,00 | 2,00 | 2,00 | 1,75 | 0,00 |
| 3-Glycidoxypropyltrimethoxysilan (Oligomer) | 5,00 | 0,00 | 4,00 | 2,00 | 2,00 | 1,75 | 0,00 |

| Säuren | | | | | | | |
|---|---|---|---|---|---|---|---|
| Hexafluortitansäure (fest) | 2,50 | 2,50 | 2,50 | 5,00 | 5,00 | 2,50 | 0,00 |
| Phosphorsäure (fest) | 4,75 | 4,75 | 4,75 | 2,50 | 7,50 | 4,75 | 7,50 |

| Pigmente | | | | | | | |
|---|---|---|---|---|---|---|---|
| Zinkphosphat | 1,00 | 1,00 | 1,00 | 1,00 | 1,00 | 1,00 | 1,00 |

| Additive | | | | | | | |
|---|---|---|---|---|---|---|---|
| Netzmittel (Alkylolammoniumsalz) | 0,50 | 0,50 | 0,50 | 0,50 | 0,50 | 0,50 | 0,50 |
| Entschäumer (schaumzerstörendes Polysiloxan) | 0,02 | 0,02 | 0,02 | 0,02 | 0,02 | 0,01 | 0,02 |

| Lösungsmittel | | | | | | | |
|---|---|---|---|---|---|---|---|
| Destilliertes Wasser | 76,23 | 76,23 | 76,23 | 75,98 | 75,98 | 76,74 | 79,98 |
| Festkörperanteil % | 23,77 | 23,77 | 23,77 | 24,02 | 24,02 | 23,26 | 20,02 |

Die Zusammensetzungen der Tabelle 1 wurden hergestellt, indem in einem ersten Schritt Säuren, Netzmittel, sowie Entschäumer und Zinkphosphat einzeln unter Rühren einem Teil des Lösungsmittels zugegeben und in die Mischung dispergiert wurden. Die Lösung wurde gerührt, bis sie klar war. Anschließend wurde das gesamte Silan-Oligomer mittels Dissolver in der Mischung gelöst. Die Phenolharz-Lösung wurde in einem zweiten Schritt unter Rühren der Lösung des ersten Schritts zugegeben. Die Mischung wurde anschließend homogenisiert und der angegebene Festkörpergehalt durch weitere Zugabe von Lösungsmittel eingestellt. Die homogenisierte Mischung wurde einer Filtration mit einer Maschenweite von < 40 µm, insbesondere < 20 µm, unterzogen.

**Tabelle 2 (* nicht erfindungsgemäßes Beispiel)**

| Zusammensetzung der Deckschicht (in Gew.-%) | | | | | | | |
|---|---|---|---|---|---|---|---|
| Rezepturvariante | V-8 | V-9 | V-10 | V-11 | V-12 | V-13 | V-14* |
| Bindemittel | | | | | | | |
| Phenolharz | 8,00 | 8,00 | 8,00 | 8,00 | 8,00 | 8,00 | 16,00 |
| Phenoxyharz | 8,00 | 8,00 | 8,00 | 8,00 | 8,00 | 8,00 | 0,00 |
| Polyesterharz | 9,00 | 9,00 | 9,00 | 9,00 | 9,00 | 10,00 | 10,00 |
| Blockiertes Isocyanat | 9,00 | 9,00 | 9,00 | 9,00 | 9,00 | 7,50 | 7,50 |

| Pigmente | | | | | | | |
|---|---|---|---|---|---|---|---|
| Zinkphosphat | 3,00 | 2,50 | 3,00 | 3,00 | 2,50 | 2,75 | 2,75 |
| Silikat | 3,00 | 2,50 | 3,00 | 3,00 | 2,50 | 2,75 | 2,75 |
| Polyamidwachs | 2,00 | 2,75 | 2,00 | 5,00 | 1,00 | 2,50 | 2,50 |
| Polypropylenwachs | 1,00 | 0,75 | 1,00 | 0,00 | 1,50 | 0,50 | 0,50 |
| Bentonite | 1,00 | 0,75 | 1,00 | 1,25 | 0,75 | 1,00 | 1,00 |

| Additive | | | | | | | |
|---|---|---|---|---|---|---|---|
| Netzmittel (Polycarbonsäurepolymer) | 0,25 | 0,25 | 0,25 | 0,25 | 0,25 | 0,15 | 0,15 |
| Entschäumer (schaumzerstörende Polyacrylate) | 0,50 | 0,50 | 0,50 | 0,50 | 0,50 | 0,50 | 0,50 |
| Paraffin | 1,00 | 1,50 | 1,00 | 0,50 | 1,00 | 0,50 | 0,50 |
| Katalysator (Dibutyl-Zinndiacetat) | 0,25 | 0,75 | 1,50 | 0,10 | 0,00 | 0,00 | 0,00 |

| Lösungsmittel | | | | | | | |
|---|---|---|---|---|---|---|---|
| Lösungsmittelgemisch (Methoxypropylacetat /Cyclohexanon) | 54,00 | 53,75 | 52,75 | 52,40 | 56,00 | 55,85 | 55,85 |
| Verhältnis Bindemittel: Pigment | 1:0,294 | 1:0,272 | 1:0,295 | 1:0,360 | 1:0,242 | 1:0,283 | 1:0,283 |
| Festkörperanteil % | 46,00 | 46,25 | 47,25 | 47,50 | 44,00 | 44,15 | 44,15 |

Die Zusammensetzungen der Tabelle 2 wurden hergestellt, indem in einem ersten Schritt Phenolharz, Lösungsmittel und Netzmittel bei niederer Drehzahl für 1 Stunde im Dissolver gelöst wurden. Zinkphosphat, Silikat, Polypropylenwachs und Bentonite wurden einzeln im Dissolver dispergiert. Anschließend erfolgte eine Nassvermahlung mit einer Perlmühle, wobei die Mischung auf eine Feinheit von < 5 µm vermahlen wurde (Grindometer nach Hegmann, DIN 53203).

In einem zweiten Schritt wurde das Phenoxyharz mit Lösungsmittel bei niederer Drehzahl für 4 Stunden im Dissolver zur Lösung gelöst. Der Entschäumer, Paraffin, blockiertes Isocyanat und Polyesterharz wurden einzeln im Dissolver dispergiert. Schlussendlich wurden das Polyamidwachs und der Katalysator im Dissolver dispergiert und das restliche Lösungsmittel zugegeben. Die homogenisierte Mischung wurde einer Filtration mit einer Maschenweite von < 40 µm unterzogen.

Für die Untersuchungen wurden die Zusammensetzungen V-1 bis V-7 aus Tabelle 1 auf eine gereinigte, auf 50 °C vorgewärmte Metalloberfläche eines Spannstahls gesprüht und bei 80 °C für 3 Sekunden getrocknet. Im Anschluss wurden die Zusammensetzungen V-8 bis V-14 aus Tabelle 2 auf den getrockneten, restwarmen Primer gesprüht und bei einer Peak Metal Temperature von 280 °C für 10 Sekunden getrocknet und vernetzt. Anschließend wurden Versuche durchgeführt und die Kombinationen bewertet.

Bei Verwendung jeglicher Kombination der erfindungsgemäßen Zusammensetzungen aus Tabelle 1 und Tabelle 2, beispielsweise V-6 mit V-9 oder V-6 mit V-13, konnte ein Korrosionsschutzsystem bereitgestellt werden, welches trotz hoher Korrosionsschutzwirkung sparsam im Verbrauch von Material ist. Alle erfindungsgemäß beschichteten Metalloberflächen können ohne Bedenken dem Schrottkreislauf zugeführt werden.

Weiters konnte festgestellt werden, dass die Versuchskombinationen trotz geringer Trockenfilmdicken von 15 - 30 µm zur Erfüllung der Anforderungen an die Korrosionsbeständigkeit für die Korrosivitätskategorie/Schutzdauer C2/VH nach EN ISO 12944-6:2018 führten.

Auch Versuchskombinationen V-2 mit V-13 oder V-2 mit V-9 zeigten hervorragende Kennwerte: Beispielsweise wurden Proben P1 (V-2 mit V-13) und P2 (V-2 mit V-9) mit Trockenfilmdicken im Bereich von 14-34 µm (von 14 bis 34 µm) erzeugt. Beide Proben P1, P2 wurden 240 h (Stunden) einer Kondensation von Wasser (einseitige Belastung, gemäß EN ISO 6270-1:2018) ausgesetzt sowie 480 h einer neutralen Salzsprühnebelprüfung (gemäß EN ISO 9227:2017) unterworfen. Probe P1 und Probe P2 erfüllten die Anforderungen sowohl gemäß EN ISO 12944-6:2018 bezüglich Korrosion am Ritz < 1,5 mm als auch gemäß EN ISO 12944-6:2018 bezüglich Gitterschnittkennwert Gt = 0 (gemäß EN ISO 2409:2020).

Derartige Ergebnisse sind von bekannten polyurethan-basierten Korrosionsschutzsystemen erst ab einer Trockenfilmdicke von insgesamt 180 µm erreichbar und bedürfen damit ausnahmslos einer deutlich höheren Schichtdicke.

Die hervorragenden erfindungsgemäßen Eigenschaften wurde mit einer Erhöhung der Trockenfilmdicken der Proben P1 und P2 weiter gesteigert. So wurden Proben P3 (V-2 mit V-13) und P4 (V-2 mit V-9) mit einer Trockenfilmdicke im Bereich von 31 bis 37 µm erzeugt. Beide Proben P3, P4 wurden 480 h einer Kondensation von Wasser (einseitige Belastung, gemäß EN ISO 6270-1:2018) ausgesetzt sowie 720 h einer neutralen Salzsprühnebelprüfung (gemäß EN ISO 9227:2017) unterworfen.

Probe P3 und Probe P4 erfüllten die Anforderungen sowohl gemäß EN ISO 12944-6:2018 bezüglich Korrosion am Ritz < 1,5 mm als auch EN ISO 12944-6:2018 bezüglich Gitterschnittkennwert Gt = 0 (nach EN ISO 2409:2020).

Derartige Ergebnisse sind von bekannten polyurethan-basierten Korrosionsschutzsysteme erst ab einer Trockenfilmdicke von insgesamt 240 µm erreichbar und bedürfen damit ausnahmslos einer deutlich höheren Schichtdicke.

Das erfindungsgemäße Korrosionsschutzsystem zur Beschichtung einer Metalloberfläche eines Spannstahls weist daher hervorragende Performance bei Ritzunterwanderung und Gitterschnittprüfung aufgrund ausgezeichneter Schichthaftung auf.

Bei Verwendung der nicht erfindungsgemäßen Zusammensetzungen bestand die beschichtete Metalloberfläche die Anforderungen an die Korrosionsbeständigkeit für die Korrosivitätskategorie/Schutzdauer C2/VH nach EN ISO 12944-6:2018 nicht. Die Verwendung eines Primers mit der Zusammensetzung V-7 aus Tabelle 1 führte zu einer beschleunigten Korrosion am Ritz bei einer Salzsprühnebelprüfung gemäß EN ISO 9227:2017. Dies wiederum bedingte ein Überschreiten der in der Norm EN ISO 12944-6:2018 als Maximalwert festgelegten 1,5 mm Schichtunterwanderung. Die Verwendung einer Deckschicht mit der Zusammensetzung V-14 aus Tabelle 2 führte nach einer Salzsprühnebelprüfung gemäß EN ISO 9227:2017 im Abreißversuch gemäß EN ISO 4624:2016 zu einer unzureichenden Haftfestigkeit.

Die aus den erfindungsgemäßen Zusammensetzungen der Tabellen 1 und 2 erhaltenen Beschichtungen sind daher ausgezeichnet zur Beschichtung von metallischen Oberflächen, insbesondere von Spannstählen geeignet und können auch in anderen Anwendungsgebieten, die einen hohen Schutz gegen Korrosion und mechanische Belastungen erfordern, zur Anwendung gelangen.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Korrosionsschutzsystem zur Beschichtung einer Metalloberfläche eines Spannstahls, welches zumindest die folgenden in der genannten Reihenfolge in Schichten aufzutragenden Bestandteile (A und B) aufweist:
einen Primer (A), umfassend:
- ein Bindemittel, aufweisend
∘ zumindest ein Phenolharz und
∘ zumindest ein Silan-Oligomer,
- zumindest eine Säure, insbesondere Hexafluortitansäure,
- zumindest ein Lösungsmittel,
und
einen Decklack (B), umfassend:
- ein Bindemittel, aufweisend
∘ zumindest ein Phenolharz,
∘ zumindest ein Phenoxyharz und
∘ zumindest einen Vernetzer, insbesondere blockiertes Isocyanat,
- einen Verdicker, insbesondere Bentonit,
- zumindest ein Lösungsmittel.

2. Korrosionsschutzsystem nach Anspruch 1, **dadurch gekennzeichnet, dass** die, insbesondere wässrige, Phenolharz-Lösung des Bindemittels des Primers einen Festkörperanteil von 27 - 33 Gew.-% aufweist, in der das zumindest eine Phenolharz und 0 - 20 Gew.-% Acrylat gelöst sind, und wobei im Primer die, insbesondere wässrige, Phenolharz-Lösung mit 5 - 20 Gew.-%, bevorzugt 9 - 13 Gew.-%, besonders bevorzugt 10 - 12 Gew.-%, enthalten ist, bezogen auf das Gewicht des Primers.

3. Korrosionsschutzsystem nach einem der vorhergehenden Ansprüche, **dadurch gekennzeichnet, dass** das zumindest eine Silan-Oligomer des Bindemittels des Primers mit 1 - 10 Gew.-%, bevorzugt 2 - 5 Gew.-%, besonders bevorzugt 3 - 4 Gew.-%, im Primer enthalten ist, bezogen auf das Gewicht des Primers.

4. Korrosionsschutzsystem nach einem der vorhergehenden Ansprüche, **dadurch gekennzeichnet, dass** die zumindest eine Säure des Primers Hexafluortitansäure ist und mit 0,1 - 5 Gew.-%, bevorzugt 1 - 4 Gew.-%, besonders bevorzugt 2 - 3 Gew.-%, im Primer enthalten ist, bezogen auf das Gewicht des Primers.

5. Korrosionsschutzsystem nach einem der vorhergehenden Ansprüche, **dadurch gekennzeichnet, dass** zumindest ein Korrosionsschutzpigment im Primer enthalten ist, wobei insbesondere vorgesehen ist, dass das Korrosionsschutzpigment ausgewählt ist aus der Gruppe aufweisend Zinkoxide, basisches Zink-Silikophosphathydrat, basisches Zink-Molybdatophosphathydrat, basisches Aluminium-Zinkphosphathydrat, Strontiumchromat, Zinkchromat, Zinktetraoxichromat, Silikate und Zinkphosphat und wobei das Korrosionsschutzpigment mit 0 - 2 Gew.-%, bevorzugt 0,5 - 1,5 Gew.-%, besonders bevorzugt 0,75 - 1,25 Gew.-%, im Primer enthalten ist, bezogen auf das Gewicht des Primers.

6. Korrosionsschutzsystem nach einem der vorhergehenden Ansprüche, wobei der Primer zusätzlich eines oder mehrere aus der Gruppe aufweisend:
- ein oder mehrere Korrosionsschutzpigmente,
- ein oder mehrere Netzmittel,
- einen oder mehrere Entschäumer
enthält.

7. Korrosionsschutzsystem nach einem der vorhergehenden Ansprüche, **dadurch gekennzeichnet, dass** das Phenolharz und das Phenoxyharz des Bindemittels des Decklacks mit jeweils 1,00 - 18,00 Gew.-%, bevorzugt 5,00 - 12,00 Gew.-%, besonders bevorzugt 7,00 - 9,00 Gew.-%, im Decklack enthalten sind, bezogen auf das Gewicht des Decklacks.

8. Korrosionsschutzsystem nach einem der vorhergehenden Ansprüche, **dadurch gekennzeichnet, dass** der Vernetzer des Bindemittels des Decklacks mit 3,00 - 15,00 Gew.-%, bevorzugt 4,00 - 10,00 Gew.-%, besonders bevorzugt 6,50 - 8,50 Gew.-%, im Decklack enthalten ist, bezogen auf das Gewicht des Decklacks.

9. Korrosionsschutzsystem nach einem der vorhergehenden Ansprüche, **dadurch gekennzeichnet, dass** das Polyesterharz des Bindemittels des Decklacks mit 0,00 - 18,00 Gew.-%, bevorzugt 7,00 - 12,00 Gew.-%, besonders bevorzugt 9,00 - 11,00 Gew.-%, im Decklack enthalten ist, bezogen auf das Gewicht des Decklacks.

10. Korrosionsschutzsystem nach einem der vorhergehenden Ansprüche, **dadurch gekennzeichnet, dass** der Verdicker des Decklacks insbesondere Bentonit ist und mit 0,25 - 2,00 Gew.-%, bevorzugt 0,50 - 1,50 Gew.-%, besonders bevorzugt 0,75 - 1,25 Gew.-%, im Decklack enthalten ist, bezogen auf das Gewicht des Decklacks.

11. Korrosionsschutzsystem nach einem der vorhergehenden Ansprüche, **dadurch gekennzeichnet, dass** zumindest ein Korrosionsschutzpigment im Decklack enthalten ist, wobei insbesondere vorgesehen ist, dass das Korrosionsschutzpigment ausgewählt ist aus der Gruppe aufweisend Zinkphosphate, Magnesiumphosphate, Aluminiumphosphate, Zinkoxide, Zink-Silikophosphathydrat, Zink-Molybdatophosphathydrat, Aluminium-Zinkphosphathydrat, Bariummetaborat, Strontiumchromat, Zinkchromat, Zinkborat und Silikate, insbesondere Calcium-modifiziertes Silikat, und wobei das Korrosionsschutzpigment mit 0,00 - 10,00 Gew.-%, bevorzugt 2,00 - 7,50 Gew.-%, besonders bevorzugt 2,50 - 6,00 Gew.-%, im Decklack enthalten ist, bezogen auf das Gewicht des Decklacks.

12. Korrosionsschutzsystem nach einem der vorhergehenden Ansprüche, **dadurch gekennzeichnet, dass** zumindest ein Wachs in Pulverform im Decklack enthalten ist, wobei insbesondere vorgesehen ist, dass das Wachs ausgewählt ist aus der Gruppe aufweisend Polyamidwachs, Polytetrafluorethylenwachs, Polyethylenwachs und Polypropylenwachs und wobei das Wachs mit 0,00 - 5,00 Gew.-%, bevorzugt 0,25 - 3,50 Gew.-%, besonders bevorzugt 0,50 - 3,00 Gew.-%, im Decklack enthalten ist, bezogen auf das Gewicht des Decklacks.

13. Korrosionsschutzsystem nach einem der vorhergehenden Ansprüche, **dadurch gekennzeichnet, dass** zumindest ein Wachs mit einem Erweichungspunkt < 80 °C, bevorzugt Paraffin, im Decklack enthalten ist und wobei das Wachs mit einem Erweichungspunkt < 80 °C mit 0,00 - 2,00 Gew.-%, bevorzugt 0,10 - 1,25 Gew.-%, besonders bevorzugt 0,25 - 1,00 Gew.-%, im Decklack enthalten ist, bezogen auf das Gewicht des Decklacks.

14. Korrosionsschutzsystem nach einem der vorhergehenden Ansprüche, wobei der Decklack zusätzlich eines oder mehrere aus der Gruppe aufweisend:
- ein oder mehrere Polyesterharze,
- ein oder mehrere Korrosionsschutzpigmente,
- ein oder mehrere pulverförmige Wachse,
- ein oder mehrere Netzmittel,
- einen oder mehrere Entschäumer,
- ein oder mehrere Wachse mit einem Erweichungspunkt < 80 °C,
- einen oder mehrere Katalysatoren
enthält.

15. Verfahren zum Beschichten einer Metalloberfläche eines Spannstahls mit einem Korrosionsschutzsystem nach einem der Ansprüche 1 bis 14.

16. Spannstahl mit einer beschichteten Metalloberfläche, wobei diese Beschichtung, insbesondere hergestellt ist durch ein Verfahren nach Anspruch 15, Folgendes umfasst:
- eine mit der Metalloberfläche chemisch verbundene Grundierung aufweisend eine Matrix aus Phenolharz und Silan-Oligomer und
- eine mit der Grundierung chemisch verbundene Deckschicht aufweisend eine vernetzte, duroplastische Matrix aus Phenolharz und Phenoxyharz, sowie in der duroplastischen Matrix verteilten Verdicker.

17. Spannstahl mit einer beschichteten Metalloberfläche nach Anspruch 16, wobei die Trockenfilmdicke der Beschichtung 5 - 100 µm, bevorzugt 10 - 60 µm, besonders bevorzugt 15 - 30 µm, beträgt.
